# EUROPÄISCHE PATENTSCHRIFT

(11) **EP 0 852 637 B1**
(45) Veröffentlichungstag und Bekanntmachung des Hinweises auf die Patenterteilung: **26.01.2000**
(21) Anmeldenummer: 96932594.3
(22) Anmeldetag: 24.09.1996
(51) Int. Cl.: D21D 5/02, B01D 29/23, B01D 29/86

(54) **SORTIERVORRICHTUNG**
SORTING DEVICE
DISPOSITIF DE TRIAGE

(30) Priorität: 25.09.1995 DE 19535619
(43) Veröffentlichungstag der Anmeldung: 15.07.1998
(73) Patentinhaber: HEINRICH FIEDLER GMBH & CO KG, D-93057 Regensburg (DE)
(72) Erfinder: EINÖDER, Norbert, D-93142 Maxhütte-Haidhof (DE)
(74) Vertreter: Hering, Hartmut, Dipl.-Ing.
(86) Internationale Anmeldenummer: EP9604174
(87) Internationale Veröffentlichungsnummer: WO9712093

(56) Entgegenhaltungen:
- EP-A- 0 036 328
- EP-A- 0 487 224
- US-A- 3 909 400
- US-A- 4 178 246

## Beschreibung

Die Erfindung bezieht sich auf eine Sortiervorrichtung, welche insbesondere für Fasersuspensionen zum Papieraufschluß bestimmt ist.

Wie beispielsweise aus US-A-3,909,400 bekannt ist, umfaßt eine derartige Sortiervorrichtung einen Rotorgrundkörper, welcher auf seinem Außenumfang mit in Richtung auf eine denselben umgebende Siebwand weisende Flügel versehen ist. Diese Flügel werden auch als Sortierflügel oder Reinigungselemente bezeichnet, und sie bilden im Zusammenwirken mit der Siebwand in Abfolge eine Saug- und Druckzone im Stoffflußbereich. Zur Halterung des jeweiligen Flügels werden Gewindestangen eingesetzt, welche einerseits fest mit den Flügeln verbunden sind, und am anderen Ende an dem Rotorgrundkörper mittels einer Schraubverbindung, umfassend eine Mutter und eine Kontermutter, fixiert sind. Um eine Verdrehung des auf diese Weise gehaltenen Flügels am Rotorgrundkörper während des Arbeitens der Sortiervorrichtung zu verhindern, sind dort zwei Gewindestangen vorgesehen, welche insgesamt als Träger für den Flügel wirken. Durch die Schraubverbindung wird eine Verstellung zur Positionierung des Flügels erreicht. Da bei dieser Tragkonstruktion mindestens zwei Gewindestangen benötigt werden, ergibt sich ein vergrößerter Strömungswiderstand, so daß zur Drehbewegung des Rotors eine relativ hohe Stromaufnahme erforderlich ist, und hiermit ein relativ großer Energieverbrauch verbunden ist. Zur exakten Einstellung des jeweils gewünschten Abstands zwischen der Außenkontur des Flügels ist durch die zwei Gewindestangen umfassende Tragkonstruktion ein großer Aufwand erforderlich, und diese Arbeiten müssen von erfahrenem Personal vorgenommen werden. Allein durch das Festlegen der Gewindestangen kann es wiederum zu Abweichungen der an sich gewünschten Position kommen. Da diese Tragkonstruktion vorstehende Einbauten hat, welche scharfkantige Bereiche an den Muttern, den Gewindestangen usw. besitzen, können Faseranspinnungen im Bereich der Tragkonstruktion auftreten, welche zu Betriebsstörungen oder zumindestens zu Leistungsminderungen bei dem Sortierer führen.

Auch gibt es einen Multiflügel-Rotor, bei dem flügelförmige Reinigungselemente über eine Strebe durch Anschweißen fest mit dem Rotorgrundkörper verbunden sind. Bei dieser Auslegung wird der gewünschte Abstand zwischen der Außenkontur des flügelförmigen Reinigungselements und der zugewandten Siebwand bei der Herstellung der festen Schweißverbindung vorgegeben. Zwar wird hierbei eine Verdrehung des flügelförmigen Reinigungselements durch die Schweißverbindung verhindert, obgleich nur eine Strebe vorhanden ist, aber die flügelförmigen Reinigungselemente lassen sich nur mit großem Aufwand austauschen und insbesondere läßt sich auch der Abstand zwischen der Außenkontur des flügelförmigen Reinigungselements und der zugewandten Siebwand nur dadurch variieren, daß man die Streben abtrennt, überarbeitet und wieder anschweißt. Daher ist eine Veränderung des Abstandes nur mit sehr großem Aufwand möglich. Auch treten bei Schweißverbindungen Spannungen an der Verbindungsstelle auf, welche zu einem Verzug an dem flügelförmigen Reinigungselement und damit zu sich ändernden unregelmäßigen Abständen führen.

Ferner gibt es einen Rotor (siehe beispielsweise EP-A-0 487 224), der mit Reinigungselementen bestückt ist, die auf Leisten aufgeschraubt sind, welche sich in Achsrichtung des Rotorgrundkörpers erstrecken. Eine Verstellung der Spaltgröße zwischen der Außenkontur des Reinigungselements und der zugewandten Siebwand läßt sich durch Lösen der Schraubverbindung und das Zwischenlegen von Blechstreifen erreichen. Hierzu benötigt man nicht nur relativ lange Blechstreifen, welche rotortypspezifisch bemessen sein müssen, sondern die Leisten bewirken auch einen hohen Strömungswiderstand, was zu einem beträchtlichen Energieverbrauch führt.

Demgegenüber zielt die Erfindung darauf ab, eine Sortiervorrichtung der gattungsgemäßen Art bereitzustellen, welche einen betriebszuverlässigen und energiesparenden Betrieb gestattet und zugleich wartungsfreundlich ausgelegt ist, und eine einfache Veränderung der Spaltgröße zwischen der Außenkontur eines Flügels und der zugewandten Siebwand ermöglicht.

Hierzu wird nach der Erfindung eine Sortiervorrichtung, insbesondere für Fasersuspensionen zum Papieraufschluß, bereitgestellt, welche im Paatentanspruch 1 angegeben ist.

Bei der erfindungsgemäßen Auslegung der Sortiervorrichtung umfaßt somit der Träger oder die Tragkonstruktion für den jeweiligen Flügel eine mehrteilige Auslegung und umfaßt wenigstens zwei Teile, nämlich ein Flügel-Trägerteil und ein Streben-Trägerteil. Das Streben-Trägerteil ist am Rotorgrundkörper befestigt und das den jeweiligen Flügel tragende Flügel-Trägerteil ist lösbar und verdrehsicher mit dem Streben-Trägerteil verbunden. Im Hinblick auf die Wartungsfreudlichkeit wird hierdurch ermöglicht, daß das Trägerteil mit dem Flügel bei Verschleiß beispielsweise schnell ausgebaut und durch ein neues ersetzt werden kann, wozu nur die lösbare Verbindung von Flügel-Trägerteil und Streben-Trägerteil gelöst zu werden braucht. Da ferner nur eine Strebe zur verdrehsicheren Halterung des jeweiligen Flügels erforderlich ist, läßt sich der Eigenwiderstand der Tragkonstruktion reduzieren und man erhält einen energiesparenden Betrieb der erfindungsgemäßen Sortiervorrichtung. Ferner läßt sich durch die lösbare Verbindung des Flügel-Trägerteils und des Streben-Trägerteils die Spaltgröße oder der Abstand zwischen der Außenkontur des Flügels und der zugewandten Siebwand auf einfache Weise und ohne großen Aufwand verändern, wobei diese Arbeiten auch kundenseitig ohne geschultes Personal und ohne Erfahrung ausgeführt werden können. Auch läßt sich die Gefahr von Verspinnungen an der Tragkonstruktion reduzieren, so daß ein betriebszuverlässiges Arbeiten der Sortiervorrichtung nach der Erfindung erreicht wird. Ferner lassen sich Verzugserscheinungen an einer gegebenenfalls vorgesehenen Schweißverbindung zwischen dem Streben-Trägerteil und dem Rotorgrundkörper mit Hilfe von entsprechenden Distanzstücken ausgleichen, so daß die Flügel nicht nur im gewünschten und einem veränderbaren Abstand, sondern auch in regelmäßigen Abständen zu der zugewandten Siebwand am Rotorgrundkörper festgelegt werden können.

Hierbei wird die lösbare Verbindung von einer Schraubverbindung gebildet, welche im wesentlichen axial und zentrisch in den Trägerteilen verläuft. Somit ist die lösbare Schraubverbindung nicht unmittelbar dem Stofffluß ausgesetzt, und kann daher auch nach längeren Betriebszeiten der Sortiervorrichtung wieder ohne Schwierigkeiten gelöst werden. Zum anderen können sich aber auch an der Schraubverbindung keine Verspinnungen ergeben, die zu Betriebsstörungen der Sortiervorrichtung führen könnten. Ferner ermöglicht diese Anordnung der lösbaren Verbindung auch eine fest Verbindung von den beiden Trägerteilen und dem Rotorgrundkörper.

Vorzugsweise ist zur Verdrehsicherung eine Formschlußverbindung zwischen den Trägerteilen vorgesehen. Diese Formschlußverbindung kann von einem mehreckförmigen, insbesondere viereckförmigen, rechteckförmigen oder dreieckförmigen Querschnitt der zu verbindenden Trägerteile gebildet werden. Diese entsprechend geformten Querschnitte greifen an der Verbindungsstelle von Flügel-Trägerteil und Streben-Trägerteil vorzugsweise ineinander und bilden den Formschluß zur Verdrehsicherung.

Alternativ kann die Formschlußverbindung von in zugehörige Aufnahmebohrungen eingreifenden Paßstiften gebildet werden. Natürlich sind auch Kombinationen von unterschiedlichen Formschlußverbindungen möglich. Da somit die Verdrehsicherung allein durch die entsprechende Ausbildung der miteinander zu verbindenden Trägerteil erreicht wird, braucht man keine zusätzlichen Maßnahmen mehr diesbezüglich vorzusehen.

Insbesondere ist die Auslegung derart getroffen, daß der Abstand der Außenkontur des Flügels von der zugewandten Siebwand bzw. die Spaltgröße, veränderbar ist. Hierzu kann man die Flügel auch noch nachträglich hinsichtlich der Position so einstellen, daß man den jeweils gewünschten Abstand erhält. Diese gegebenenfalls noch vor Ort notwendigen Nachjustierungen können selbst anwenderseitig ohne großen Aufwand vorgenommen werden. Ferner läßt sich durch diese Variabilität des Abstands der Außenkontur des Flügels von der zugewandten Siebwand auch eine individuelle Abstimmung auf die jeweiligen Gegebenheiten und die Anwendungszwecke vornehmen.

Vorzugsweise werden zur Abstandsveränderung Distanzelemente, insbesondere Distanzscheiben, zwischen den zu verbindenden Trägerteilen angeordnet, so daß diese dort verliersicher gehalten sind und insbesondere auch derart angeordnet sind, daß sie im wesentlichen frei von einer Gefahr der Bildung von Faseranspinnungen angeordnet sind. Ferner wirken sie effektiv und zuverlässig gerade an der Schnittstelle zwischen den beiden zu verbindenden Trägerteilen.

Gemäß einer bevorzugten Ausführungsform nach der Erfindung ist zur Bildung der Formschlußverbindung ein vorstehender Zapfen an dem Flügel-Trägerteil und eine zugeordnete Aufnahme am Streben-Trägerteil vorgesehen. Der Zapfen und die Aufnahme haben dann die entsprechenden, vorstehend beschriebenen Querschnittsformen für den Formschluß beim passenden Ineinandersetzen von Zapfen und Aufnahme, so daß in zuverlässiger Weise ein Verdrehen der beiden Trägerteile zueinander verhindert wird. Zur sicheren Halterung der Distanzscheiben, welche gegebenenfalls zur Veränderung des Abstands zwischen der Außenkontur des Flügels und der zugewandten Siebwand vorgesehen sind, umgeben diese den vorspringenden Zapfen. Hierdurch sind sie verliersicher gehalten.

Der Querschnitt des Flügel-Trägerteils und/oder des Streben-Trägerteils kann an sich frei gewählt werden. Vorzugsweise ist der Querschnitt rund oder mehreckförmig, vorzugsweise viereckförmig oder rechteckförmig, ausgebildet.

Zur Herstellung einer festen, zuverlässigen und sicheren Schraubverbindung der beiden Trägerteile wird vorzugsweise ein Schraubenbolzen genommen, welcher bezüglich der Außenkontur des Flügels in etwa senkrecht angeordnet, durch das Flügel-Trägerteil durchgesteckt und in ein Gewinde im Streben-Trägerteil eingeschraubt ist. Bei dieser Auslegung geht daher der Schraubenbolzen durch den Flügel und das Flügel-Trägerteil, insbesondere dessen Zentrum mit Spiel, und die Anzugsverbindung wird dann in Verbindung mit dem Gewinde im Streben-Trägerteil hergestellt. Hierbei handelt es sich vorzugsweise um ein Innengewinde.

Das Streben-Trägerteil ist vorzugsweise mit dem Rotorgrundkörper durch Schweißen verbunden. Somit ist das Streben-Trägerteil an dem Rotorgrundkörper zuverlässig und stabil fixiert, während die Verstellmöglichkeiten für den Siebspalt und die Verdrehsicherung im Bereich der Schnittstelle zwischen den beiden Tragteilen angeordnet ist. Hierdurch lassen sich fertigungstechnische Vorteile erzielen.

Aus herstellungstechnischen Grüßen wird es bevorzugt, daß der Flügel in Form eines Flügelelements an dem Flügel-Trägerteil angeschweißt ist. Auch hierdurch erhält man eine feste vorgegebene Verbindung von Flügelelement und Flügel-Trägerteil ähnlich wie auf der Seite des Rotorgrundkörpers.

Insgesamt gesehen ist daher die jeweilige Tragkonstruktion für den Flügel stabil und widerstandsfähig, kommt mit möglichst wenig Einzelteilen aus, welche mit nur einer kleinen wirksamen Fläche in den Stoffflußbereich ragen, und zudem werden in zuverlässiger Weise noch die Verstell- und Veränderungsmöglichkeiten für die Spaltgröße unter gleichzeitiger Verwirklichung einer Verdrehsicherung ermöglicht, wobei insbesondere das den jeweiligen Flügel tragende Trägerteil schnell, einfach und wenig aufwendig im Wartungsfalle beispielsweise ausgetauscht werden kann. Durch die mehrteilige Auslegung der Tragkonstruktion für den Flügel kann der radiale Vorstand desselben über den Außenumfang des Rotorgrundkörpers auf nahezu universelle Weise verstellt, verändert und den jeweiligen Gegebenheiten angepaßt werden. Die bei der Erfindung hierfür eingesetzten Distanzstücke in Form von Distanzscheiben sind für alle Tragkonstruktionen im wesentlichen gleich, so daß sie sich kostengünstig vorfertigen lassen und im Bedarfsfall in der jeweils gewünschten Anzahl eingelegt werden können. Auch sind ohne Schwierigkeiten noch nachträgliche Veränderungen diesbezüglich möglich.

Die Erfindung wird nachstehend an Hand von bevorzugten Ausführungsformen unter Bezugnahme auf die beigefügte Zeichnung näher erläutert. Darin zeigt:
- Fig. 1: eine schematische Ausschnittsansicht einer Sortiervorrichtung in Teilschnittdarstellung mit einem Rotor, welcher von einem Sieb umgeben ist,
- Fig. 2: eine Schnittansicht entlang der Linie II-II in Fig. 1,
- Fig. 3: eine Schnittansicht entlang der Linie III-III in Fig. 1, und
- Fig. 4: eine schematische, perspektivische, auseinandergezogene Darstellung einer alternativen Ausführungsform einer lösbaren Verbindung der beiden Trägerteile mit einer Ausführungsvariante einer Verdrehsicherung.

In den Figuren der Zeichnung sind gleiche oder ähnliche Teile mit denselben Bezugszeichen versehen. In der Zeichnung nicht dargestellte Einzelheiten der Sortiervorrichtung sind von üblicher Auslegungsform und sind daher weder dargestellt noch werden sie nachstehend näher erläutert.

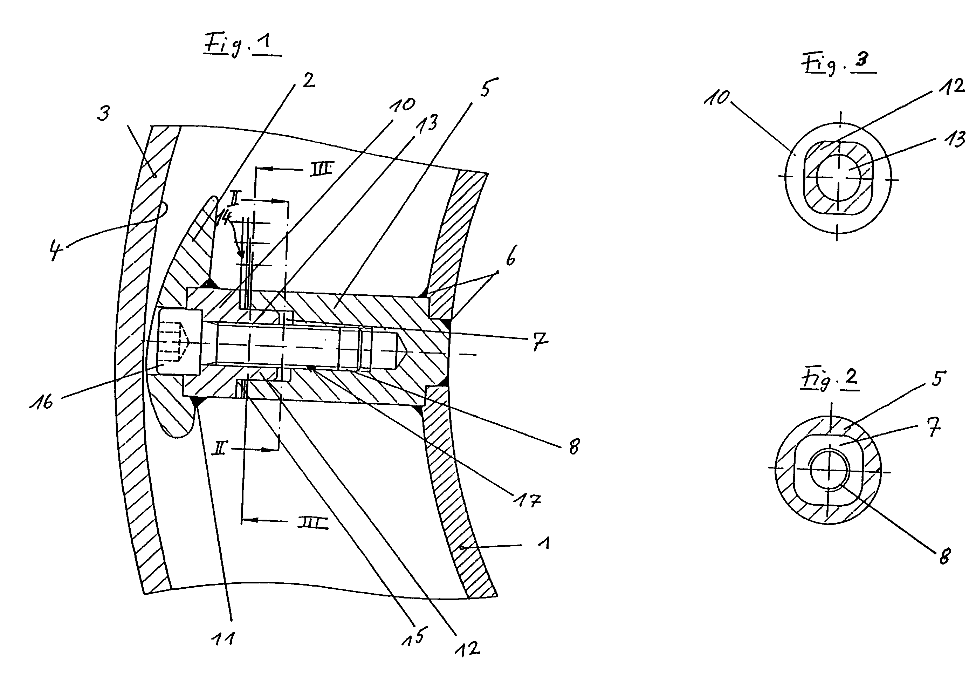

An Hand den Figuren 1 bis 3 wird eine erste bevorzugte Ausführungsform nach der Erfindung näher erläutert. Mit 1 ist ausschnittshaft ein Rotorgrundkörper gezeigt, welcher im wesentlichen zylindrisch ausgebildet sein kann und beispielsweise als Hohlzylinder ausgebildet sein kann. Dieser Rotorgrundkörper 1 kann mit mehreren Flügeln 2, welche als Reinigungselemente oder Sortierelemente dienen, bestückt sein. Die Anordnung der Flügel 2 auf dem Außenumfang des Rotorgrundkörpers 1 kann auf übliche Weise erfolgen. Zur Verdeutlichung der Erfindung wird nachstehend nur auf eine Tragkonstruktion eines einzelnen Flügels 2 eingegangen, so daß natürlich die weiteren Flügel 2 am Rotorgrundkörper 1 auf gleiche oder ähnliche Weise festgelegt werden können.

Der Rotorgrundkörper 1 mit den daran befestigten Flügeln 2 wird von einem Sieb 3 umgeben, dessen Innenfläche eine Siebwand 4 bildet, welche - obgleich nicht näher dargestellt ist - natürlich mit entsprechenden Perforationen versehen ist. Der jeweilige Flügel 2 überstreicht die Siebwand 4 in einem vorbestimmten Abstand, welcher sich beispielsweise auf etwa 1 bis 12 mm belaufen kann. Dieser Abstand kann von Anwendungsfall zu Anwendungsfall und von Sortieraufgabe zu Sortieraufgabe unterschiedlich sein, so daß er veränderbar sein sollte.

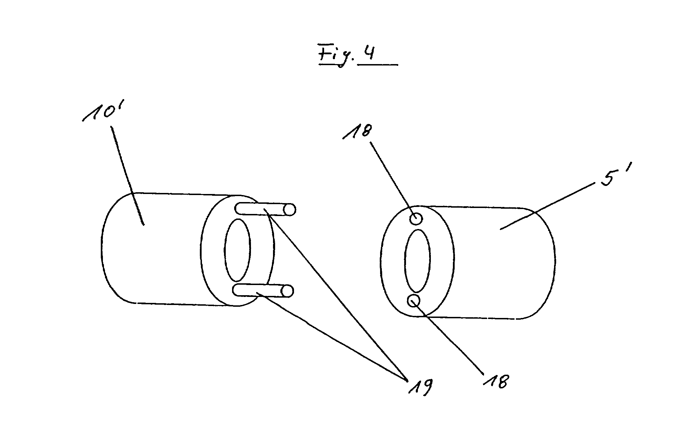

Die Tragkonstruktion für den Flügel 2 umfaßt ein Streben-Trägerteil 5, welches, wie dargestellt, etwa radial von der Außenkontur des Rotorgrundkörpers 1 vorsteht und in Richtung der Siebwand 4 weist. Dieses Streben-Trägerteil ist mittels einer Schweißverbindung welche bei 6 angedeutet ist, fest mit dem Rotorgrundkörper 1 verbunden und durchsetzt dessen Wand teilweise. Stirnseitig besitzt das Streben-Trägerteil 5, das heißt an der dem Rotorgrundkörper abgewandten Seite, eine vertiefte Aufnahme 7, welche beim dargestellten Beispiel eine viereckförmige Kontur hat (siehe Figur 2). Von dieser Aufnahme 7 erstreckt sich mittig durch das Streben-Trägerteil 5 eine Innengewindebohrung 8. Ferner umfaßt die Tragkonstruktion ein Flügel-Trägerteil 10, welches das Flügelelement oder den Flügel 2 trägt. An diesem Flügel-Trägerteil 10 ist der Flügel 2, wie beispielsweise bei 11 angedeutet, mittels einer Schweißverbindung fest angebracht. Das Flügel-Trägerteil 10 und das Streben-Trägerteil 5 haben entlang ihrer Haupterstreckung im wesentlichen gleiche Querschnittsabmessungen. Das Flügel-Trägerteil 10 besitzt einen mittig vorspringenden Zapfen 12, welcher nach Figur 3 ebenfalls einen viereckförmigen Querschnitt mit Paßabmessungen zu dem viereckförmigen Umriß der Aufnahme 7 hat. Ferner besitzt das Flügel-Trägerteil 10 in axialer Verlängerung der Innengewindebohrung 8 des Streben-Trägerteils 5 eine Durchgangsbohrung 13, welche auch den Zapfen 12 durchsetzt.

Wie schematisch in Figur 1 angedeutet ist, sind den Zapfen 12 umgebende Distanzstücke 14 in Form von Distanzscheiben 15 angeordnet, deren Anzahl zur Veränderung des Abstands zwischen der Schulter des Flügel-Trägerteils 10 und der zugeordneten Stirnseite des Streben-Trägerteils 5 entsprechend gewählt werden kann. Bei der Verbundanordnung aus Streben-Trägerteil 5 und Flügel-Trägerteil 10 kann dann der Abstand der Außenkontur des Flügels 2 zu der zugewandt liegenden Siebwand 4 in entsprechender Weise variiert werden.

Zur lösbaren Verbindung von Flügel-Trägerteil 10 mit Flügel 2 und Streben-Trägerteil 5 ist ein Schraubenbolzen 17 vorgesehen, welcher vorzugsweise einen Kopf 16 mit Innensechskant hat. In dem in Figur 1 dargestellten Zustand ist der Kopf 16 gegenüber der Außenkontur des Flügels 2 zurückversetzt und daher versenkt angeordnet. Somit bildet der Kopf 16 kein vorstehendes Teil bei der Tragkonstruktion des Flügels 2 nach der erfindungsgemäßen Auslegung. Der Schraubenbolzen 17 wird zur Montage durch die Durchgangsbohrung 3 durchgesteckt und wird dann in die Innengewindebohrung 8 des Streben-Trägerteils 5 eingeschraubt. Durch die entsprechende Konturierung der Aufnahme 7 und des Zapfens 12 wird mit Formschluß eine Verdrehsicherung gebildet, so daß sich das Flügel-Trägerteil 10 bei angezogenem Schraubenbolzen 17 nicht gegenüber dem Streben-Trägerteil 5 verdrehen kann. In Abweichung von der dargestellten viereckförmigen Auslegung von Zapfen 12 und Aufnahme 7 kann auch eine andere Formschlußverbindung gewählt werden, und es kommen insbesondere beispielsweise mehreckförmige, rechteckförmige, dreieckförmige oder ähnliche Ausgestaltungsformen in Betracht.

Die Distanzscheiben 15 können beispielsweise in einer Dickenabstufung von 1 mm als Massenartikel vorgefertigt werden und können dann je nach Bedarf eingesetzt werden.

Wie aus der voranstehenden Beschreibung zu ersehen ist, umfaßt die Tragkonstruktion für den Flügel 2 eine einzige Strebe, welche mehrteilig, nämlich wenigstens zweiteilig, ausgebildet ist und das Streben-Trägerteil 5 und das Flügel-Trägerteil 10 beispielsweise umfaßt. Der Außenumfang von der verbundenen Anordnung aus Streben-Trägerteil 5 und Flügel-Trägerteil 10 ist im wesentlichen frei von vorstehenden Teilen, abgesehen von dem Flügel 2 selbst, so daß Faseranspinnungen wirksam verhindert werden können. Auch ist bei dieser Auslegung der Eigenströmungswiderstand der Tragkonstruktion in dem Stoffflußbereich so weit wie möglich reduziert, so daß zum Betreiben des Sortierers möglichst wenig Energie aufgewendet werden muß.

Wenn nun beispielsweise ein Flügel 2 beschädigt oder verschlissen ist, so lassen sich diese Wartungsarbeiten an Ort und Stelle schnell und einfach durchführen. Zuerst wird der Schraubenbolzen 17 gelöst und dann zusammen mit dem Flügel-Trägerteil 10 von dem Streben-Trägerteil 5 abgenommen. Es wird dann ein komplett neues Flügel-Trägerteil 10 mit Flügel 2 eingesetzt und der Schraubbolzen 17 wird wiederum eingeführt und angezogen, so daß die notwendigen Wartungsarbeiten abgeschlossen sind.

Wenn hingegen bei einer sich ändernden Sortieraufgabe beispielsweise der Abstand zwischen der Außenkontur des Flügels 2 und der Siebwand 4 verändert werden muß, so wird ebenfalls der Schraubenbolzen 17 gelöst, und es wird dann eine oder es werden mehrere Distanzscheiben 15 entnommen oder weitere eingelegt, je nach dem, ob der Abstand zu vergrößern oder zu verkleinern ist. Auch diese Feinabstimmung des Abstandes läßt sich anwenderseitig ohne Schwierigkeiten auch von ungeschultem Personal vornehmen. Daher lassen sich erforderliche Nachrüstarbeiten zeit- und kostengünstig ausführen. Ferner lassen sich die Einzelteile der Tragkonstruktion für den Flügel 2 bei der erfindungsgemäßen Auslegung ebenfalls kostengünstig herstellen, so daß insgesamt gesehen eine Befestigung für die Flügel 2 am Rotorgrundkörper 1 bereitgestellt wird, welche nicht nur wartungsfreundlich und universell einsetzbar ist, sondern auch kostengünstig darstellbar ist.

An Hand von Figur 4 wird schematisch ohne Bezugnahme auf einen Rotorgrundkörper und auf Flügel eine alternative Ausgestaltungsform einer zweiteiligen Ausführungsform einer Tragstrebe gezeigt. Das den nicht dargestellten Flügel tragende Flügel-Trägerteil ist mit 10' und das entsprechende Streben-Trägerteil mit 5' bezeichnet. Wie gezeigt, sind in der Stirnseite des Streben-Trägerteils 5' beispielsweise zwei Paßbohrungen 8 vorgesehen, welche beispielsweise diametral gegenüberliegend angeordnet sind. An dem hiermit zu verbindenden Flügel-Trägerteil 10' stehen dann in entsprechender Weise zwei Paßstifte 19 vor, welche im verbundenen Zustand der beiden Trägerteile 5' und 10' in die Paßbohrungen 18 eingreifen. Alle weiteren Einzelheiten der Verbindung dieser beiden Trägerteile 5' und 10' sowie bezüglich des Rotorgrundkörpers und des Flügels können gleich wie in der Figur 1 dargestellt und voranstehend beschrieben ausgelegt werden. Durch das Zusammenwirken der Paßbohrungen 18 und der Paßstifte 19 wird ähnlich wie bei der entsprechenden Konturierung von Zapfen 12 und Aufnahme 7 eine Verdrehsicherung der beiden miteinander zu verbindenden Trägerteile, nämlich des Flügel-Trägerteils 10' und des Streben-Trägerteils 5' verwirklicht. Auch hierbei handelt es sich um eine formschlüssige Verdrehsicherung.

Selbstverständlich sind auch noch weitere Ausgestaltungsformen von Verdrehsicherungen möglich, die der Fachmann im Bedarfsfall einsetzen kann, ohne den Erfindungsgedanken zu verlassen. Die Erfindung ist daher nicht auf die voranstehend beschriebenen Einzelheiten diesbezüglich und auch bezüglich einer weiteren Auslegung der Tragkonstruktion des Flügels 2 beschränkt. Wesentlich vielmehr ist es, daß ein Flügel 2 mittels einer hinsichtlich der Vorstandsgröße veränderbaren, strebenförmigen Verbindung verdrehsicher und lösbar mit dem Rotorgrundkörper 1 verbunden ist. Hierzu wird die Tragstrebe geteilt und man erhält wenigstens zwei gesonderte Teile, nämlich ein Streben-Trägerteil 5, 5' und ein Flügel-Trägerteil 10, 10'.

Der Querschnitt der Flügel-Trägerteile 10, 10' und der Streben-Trägerteile 5, 5' kann weitgehend frei gewählt werden, und sie können beispielsweise von Rundmaterial oder Material von viereckförmigem oder rechteckförmigem Querschnitt gebildet werden. Wesentlich ist auch die einfache Veränderung des Abstandes von der Außenkontur des Flügels 2 zu der zugewandten Siebwand 4, was mit Hilfe von Distanzstücken 14, vorzugsweise Distanzscheiben 15, erreicht wird, welche zwischen den beiden zu verbindenden Trägerteilen 5, 5' und 10, 10' angeordnet werden können.

### Bezugszeichenliste

- 1: Rotorgrundkörper
- 2: Flügel
- 3: Sieb
- 4: Siebwand (Innenfläche)
- 5, 5': Streben-Trägerteil
- 6: Schweißverbindung
- 7: Aufnahme
- 8: Innengewindebohrung
- 10, 10': Flügel-Trägerteil
- 11: Schweißverbindung
- 12: Zapfen
- 13: Durchgangsbohrung
- 14: Distanzstücke
- 15: Distanzscheiben
- 16: Kopf
- 17: Schraubenbolzen
- 18: Paßbohrungen
- 19: Paßstifte

## Patentansprüche

1. Sortiervorrichtung, insbesondere für Fasersuspensionen zum Papieraufschluß, mit einem Rotorgrundkörper (1), welcher auf seinem Außenumfang mit in Richtung auf eine denselben umgebende Siebwand (4) weisenden Flügel (2) versehen ist, welche derart konturiert sind, daß sie im Zusammenwirken mit der Siebwand (4) in Abfolge eine Saug- und Druckzone im Stoffflußbereich bilden, wobei jeder Flügel (2) über einen im wesentlichen radial verlaufenden Träger am Rotorgrundkörper (1) befestigt ist, welcher ein Flügel-Trägerteil (10, 10') und ein am Rotorgrundkörper (1) befestigtes Streben-Trägerteil (5, 5') umfaßt, welche lösbar und verdrehsicher miteinander verbunden sind, **dadurch gekennzeichnet**, daß die lösbare Verbindung von einer Schraubverbindung (8, 17) gebildet wird, welche im wesentlichen axial und zentrisch in den Trägerteilen (5, 10; 5', 10') verläuft.

2. Sortiervorrichtung nach Anspruch 1, **dadurch gekennzeichnet**, daß als Verdrehsicherung eine Formschlußverbindung zwischen den Trägerteilen (5, 10; 5', 10') vorgesehen ist.

3. Sortiervorrichtung nach Anspruch 2, **dadurch gekennzeichnet**, daß die Formschlußverbindung von einem mehreckförmigen, vorzugsweise viereckförmigen, rechteckförmigen oder dreieckförmigen Querschnitt der zu verbindenden Trägerteile (5, 10) gebildet wird.

4. Sortiervorrichtung nach Anspruch 2, **dadurch gekennzeichnet**, daß die Formschlußverbindung von in zugehörigen Aufnahmebohrungen (18) eingreifenden Paßstiften (19) gebildet wird.

5. Sortiervorrichtung nach einem der vorangehenden Ansprüche, **dadurch gekennzeichnet**, daß der Abstand der Außenkontur des Flügels (2) von der zugewandten Siebwand (4) veränderbar ist.

6. Sortiervorrichtung nach Anspruch 5, **dadurch gekennzeichnet**, daß zur Abstandsveränderung Distanzstücke (14), insbesondere Distanzscheiben (15), zwischen den zu verbindenden Trägerteilen (5, 10; 5', 10') angeordnet sind.

7. Sortiervorrichtung nach Anspruch 2 oder 3, **dadurch gekennzeichnet**, daß zur Bildung der Formschlußverbindung ein vorstehender Zapfen (12) an dem Flügel-Trägerteil (10) und eine zugeordnete Aufnahme (7) am Streben-Trägerteil (5) vorgesehen ist.

8. Sortiervorrichtung nach Anspruch 6 und 7, **dadurch gekennzeichnet**, daß die Distanzscheiben (15) den vorspringenden Zapfen (12) umgeben.

9. Sortiervorrichtung nach einem der vorangehenden Ansprüche, **dadurch gekennzeichnet**, daß das Flügel-Trägerteil (10, 10') und/oder das Streben-Trägerteil (5, 5') im Querschnitt rund oder mehreckförmig, vorzugsweise viereckförmig oder rechteckförmig ausgebildet sind.

10. Sortiervorrichtung nach einem der Ansprüche 1 bis 9, **dadurch gekennzeichnet**, daß die Schraubverbindung einen Schraubenbolzen (17) umfaßt, welcher bezüglich der Außenkontur des Flügels (2) versenkt angeordnet, durch das Flügel-Trägerteil (10, 10') durchgesteckt und in ein Gewinde (8) im Streben-Trägerteil (5, 5') eingeschraubt ist.

11. Sortiervorrichtung nach einem der vorangehenden Ansprüche, **dadurch gekennzeichnet**, daß das Streben-Trägerteil (5, 5') mit dem Rotorgrundkörper (1) durch Schweißen verbunden ist.

12. Sortiervorrichtung nach einem der vorangehenden Ansprüche, **dadurch gekennzeichnet**, daß der Flügel (2) am Flügel-Trägerteil (10, 10') angeschweißt ist.

## Claims

1. Sorting device, in particular for fibre suspensions for paper pulping, having a rotor body (1) which is provided on its outer periphery with vanes (2) pointing in the direction of a screen wall (4) surrounding the same, and which are contoured such that they form in succession a suction and pressure zone in the stock flow region in cooperation with the screen wall (4), wherein each vane (2) is attached to the rotor body (1) via an essentially radially running support which comprises a vane support part (10, 10') and a strut support part (5, 5') attached to the rotor body (1) which are connected to one another releasably and to be secure against rotation, characterised in that the releasable connection is formed by a screw connection (8, 17) which runs essentially axially and centrally in the support parts (5, 10; 5', 10').

2. Sorting device according to claim 1, characterised in that a positive connection is provided between the support parts (5, 10; 5', 10') as security against rotation.

3. Sorting device according to claim 2, characterised in that the positive connection is formed by a polygonal, preferably square, rectangular or triangular cross-section of the support parts (5, 10) to be connected.

4. Sorting device according to claim 2, characterised in that the positive connection is formed by alignment pins (19) engaging in associated recess bores (18).

5. Sorting device according to one of the preceding claims, characterised in that the distance of the outer contour of the vane (2) from the facing screen wall (4) can be altered.

6. Sorting device according to claim 5, characterised in that spacers (14), in particular spacer discs (15), are arranged between the support parts (5, 10; 5', 10') to be connected to alter the distance.

7. Sorting device according to claim 2 or 3, characterised in that a projecting journal (12) is provided on the vane support part (10) and an assigned recess (7) is provided on the strut support part (5) to form the positive connection.

8. Sorting device according to claim 6 and 7, characterised in that the spacer discs (15) surround the projecting journal (12).

9. Sorting device according to one of the preceding claims, characterised in that the vane support part (10, 10') and/or the strut support part (5, 5') are designed to be round or polygonal, preferably square or rectangular in cross-section.

10. Sorting device according to one of claims 1 to 9, characterised in that the screw connection comprises a screw bolt (17), which is arranged to be sunken with respect to the outer contour of the vane (2), is pushed through the vane support part (10, 10') and screwed into a thread (8) in the strut support part (5, 5').

11. Sorting device according to one of the preceding claims, characterised in that the strut support part (5, 5') is connected to the rotor body (1) by welding.

12. Sorting device according to one of the preceding claims, characterised in that the vane (2) is welded onto the vane support part (10, 10').

## Revendications

1. Dispositif de triage, en particulier pour des suspensions de fibres pour la fabrication de pâte à papier, comportant un corps de base de rotor (1) qui est pourvu à sa périphérie extérieure d'ailettes (2) en direction d'une paroi constituée par un tamis (4) qui entoure le rotor, les ailettes ayant une forme externe telles qu'elles créent, en action concertée avec la paroi du tamis (4), une zone d'aspiration et de pression dans la région d'écoulement de la matière, chaque ailette (2) étant fixée sur un support pratiquement radial sur le rotor (1), le support comprenant une partie support d'ailette (10, 10') et une partie support de montant (5, 5') fixé au corps de base du rotor (1), **caractérisé en ce** que la liaison amovible est formée par une liaison à vis (8, 17) qui est, dans les parties supports (5, 10 ; 5', 10'), pratiquement axiale et centrale.

2. Dispositif de triage suivant la revendication 1, **caractérisé en ce** que, comme dispositif de sécurité de torsion, est prévu, entre les parties supports (5, 10 ; 5', 10'), un accouplement à griffes.

3. Dispositif de triage suivant la revendication 2, **caractérisé en ce** que l'accouplement à griffes a, en ce qui concerne la partie support (5, 10) à relier, une section polygonale, de préférence carrée, rectangulaire, ou triangulaire.

4. Dispositif de triage suivant la revendication 2, **caractérisé en ce** que l'accouplement à griffes est formé de goujons (19) pénétrant dans des trous (18) de positionnement.

5. Dispositif de triage suivant l'une des revendications précédentes, **caractérisé en ce** que la distance du contour externe de l'ailette (2) à la paroi tamis (4), qui lui fait face, peut être modifiée.

6. Dispositif de triage suivant la revendication 5, **caractérisé en ce** que, pour modifier la distance, on place des butées d'espacement (14), en particulier des rondelles d'espacement (15), entre les parties supports (5, 10 ; 5', 10') à réunir.

7. Dispositif de triage suivant la revendication 2 ou 3, **caractérisé en ce** que, pour former l'accouplement à griffes, on prévoit un tourillon saillant (12) sur la partie support d'ailette (10), et un logement adapté (7) sur la partie support de montant (5).

8. Dispositif de triage suivant les revendications 6 et 7, **caractérisé en ce** que les rondelles d'espacement (15) entourent le tourillon saillant (12).

9. Dispositif de triage suivant l'une des revendications précédentes, **caractérisé en ce** que la partie support d'ailette (10, 10') et/ou la partie support de montant (5, 5') ont une section de forme ronde ou polygonale, de préférence carrée ou rectangulaire.

10. Dispositif de triage suivant l'une des revendications 1 à 9, **caractérisé en ce** que la liaison à vis comprend un boulon fileté (17) qui est respectivement encastré dans le contour extérieur de l'ailette (2), qui transperce la partie support d'ailette (10, 10') et qui est vissé dans un taraudage (8) de la partie support de montant (5, 5').

11. Dispositif de triage suivant l'une des revendications précédentes, **caractérisé en ce** que la partie support de montant (5, 5') est liée, par soudure, au corps de base du rotor (1).

12. Dispositif de triage suivant l'une des revendications précédentes, **caractérisé en ce** que l'ailette (2) est soudée à la partie support d'ailette (10, 10').
